# EUROPEAN PATENT APPLICATION

(11) **EP 4 749 400 A1**
(43) Date of publication of application: **27.05.2026**
(21) Application number: 24864709.1
(22) Date of filing: 12.09.2024
(51) Int. Cl.: G06F 1/3296

(54) **SERVICE EXECUTION METHOD AND RELATED APPARATUS**

(30) Priority: 15.09.2023 CN 202311200761
(71) Applicant: Huawei Technologies Co., Ltd., Shenzhen, Guangdong 518129 (CN)
(72) Inventor: TIAN, Yige, Shenzhen, Guangdong 518129 (CN); ZHAO, Yuming, Shenzhen, Guangdong 518129 (CN)
(74) Representative: Pfenning, Meinig & Partner mbB
(86) International application number: PCT/CN2024/118599
(87) International publication number: WO 2025/055995

(57) **Abstract**

This application discloses a service execution method and a related apparatus, applied to an electronic device. The electronic device includes a processor, a power supply controller, and a photoplethysmography PPG module. The PPG module includes an infrared device and a green light device. The method includes: when a first service is executed, controlling the power supply controller to provide a first voltage for the PPG module; controlling the processor to send a first control signal to the PPG module; and controlling the PPG module to turn on the green light device in response to the first control signal; and when a second service is executed, controlling the power supply controller to provide a second voltage for the PPG module; controlling the processor to send a second control signal to the PPG module; and controlling the PPG module to turn on the infrared device in response to the second control signal. In this way, power consumption can be reduced, and a battery life capability of the electronic device can be improved.

## Description

This application claims priority to Chinese Patent Application No. 202311200761.7, filed with the China National Intellectual Property Administration on September 15, 2023 and entitled "SERVICE EXECUTION METHOD AND RELATED APPARATUS", which is incorporated herein by reference in its entirety.

### TECHNICAL FIELD

This application relates to the field of electronic technologies, and in particular, to a service execution method and a related apparatus.

### BACKGROUND

With development of electronic technologies, wearable devices are more frequently used in daily life. When wearing the wearable device, a user may execute services related to sports, health, and the like by using a photoplethysmography (photoplethysmography, PPG) module, to monitor a health status or a sports status of the user in real time.

However, when the wearable device executes some services (for example, a sleep monitoring service), the PPG module needs to maintain a working state for a long time. This increases power consumption of the wearable device.

### SUMMARY

This application provides a service execution method and a related apparatus, to provide different voltages for a photoplethysmography PPG module based on an executed service, which reduces power consumption of the PPG module and improves a battery life capability of an electronic device.

According to a first aspect, this application provides a service execution method, applied to an electronic device. The electronic device includes a processor, a power supply controller, and a photoplethysmography PPG module. The PPG module includes an infrared device and a green light device. The method includes: when a first service is executed, controlling the power supply controller to provide a first voltage for the PPG module; controlling the processor to send a first control signal to the PPG module; and controlling the PPG module to turn on the green light device in response to the first control signal; and when a second service is executed, controlling the power supply controller to provide a second voltage for the PPG module; controlling the processor to send a second control signal to the PPG module; and controlling the PPG module to turn on the infrared device in response to the second control signal.

In this way, when the green light device in the PPG module does not need to be used, a low voltage can be provided for the PPG module, which reduces power consumption of the PPG module and improves a battery life capability of the electronic device.

In a possible implementation, the electronic device further includes a first circuit and a second circuit. The first circuit is configured to convert a voltage of a battery into the first voltage, and the first circuit is further configured to provide the first voltage for the power supply controller. The second circuit is configured to convert the voltage of the battery into the second voltage, and the second circuit is further configured to provide the second voltage for the power supply controller. Controlling the power supply controller to provide the first voltage for the PPG module specifically includes: controlling the processor to send a first signal to the power supply controller; and controlling the power supply controller to provide the first voltage for the PPG module in response to the first signal. Controlling the power supply controller to provide the second voltage for the PPG module specifically includes: controlling the processor to send a second signal to the power supply controller; and controlling the power supply controller to provide the second voltage for the PPG module in response to the second signal.

In this way, two different voltages may be provided by using one battery.

After the voltage is converted by the circuit, a voltage that is the same as the voltage of the battery may be obtained, or a voltage that is different from the voltage of the battery may be obtained.

In a possible implementation, the first circuit includes a voltage boost device, and the second circuit includes a voltage stabilizing device.

In this way, the first voltage that is higher than the voltage of the battery may be obtained by using the voltage boost device, and the second voltage that is the same as or close to the voltage of the battery may be obtained by using the voltage stabilizing device.

In a possible implementation, the electronic device further includes a first battery and a second battery. The first battery is configured to provide the first voltage for the power supply controller, and the second battery is configured to provide the second voltage for the power supply controller. Controlling the power supply controller to provide the first voltage for the PPG module specifically includes: controlling the processor to send a first signal to the power supply controller; and controlling the power supply controller to provide the first voltage for the PPG module in response to the first signal. Controlling the power supply controller to provide the second voltage for the PPG module specifically includes: controlling the processor to send a second signal to the power supply controller; and controlling the power supply controller to provide the second voltage for the PPG module in response to the second signal.

In this way, two different voltages may be provided by using two batteries.

In a possible implementation, the method further includes: before controlling the power supply controller to provide the first voltage for the PPG module, determining that a quantity of execution times of the first service is one, where the quantity of execution times indicates whether to end the service after the service is executed once; and when a third service is executed, determining that a quantity of execution times of the third service is a plurality of times; controlling the power supply controller to provide the second voltage for the PPG module; controlling the processor to send the first control signal to the PPG module; and controlling the PPG module to turn on the green light device in response to the first control signal.

In this way, for a service that needs to use the green light device and whose quantity of execution times is one, a high voltage may be provided for the PPG module when the service is executed. For a service that needs to use the green light device and whose quantity of execution times is a plurality of times, a low voltage may be provided for the PPG module when the service is executed.

In a possible implementation, in a process of executing the second service, the method further includes: when the first service is executed, controlling the power supply controller to switch an input voltage of the PPG module from the second voltage to the first voltage; controlling the processor to send the first control signal to the PPG module; and controlling the PPG module to turn on the green light device in response to the first control signal.

In this way, when a low voltage is used to supply power to the PPG module, if there is a service that needs a high voltage, the input voltage of the PPG module may be switched to a high voltage.

In a possible implementation, after the second service is executed, the method further includes: when the first service is executed, if controlling the power supply controller to provide the first voltage for the PPG module fails, controlling the power supply controller to provide the second voltage for the PPG module.

In this way, when power cannot be supplied to the PPG module by using the first voltage, power may be supplied to the PPG module by using the second voltage.

In a possible implementation, after the first service is executed, the method further includes: when the second service is executed, if controlling the power supply controller to provide the second voltage for the PPG module fails, controlling the power supply controller to provide the first voltage for the PPG module.

In this way, when power cannot be supplied to the PPG module by using the second voltage, power may be supplied to the PPG module by using the first voltage.

According to a second aspect, this application provides an electronic device, including one or more processors, one or more memories, and a PPG module. The one or more memories are coupled to the one or more processors. The one or more memories are configured to store computer program code. The computer program code includes computer instructions, and when the one or more processors execute the computer instructions, the electronic device is enabled to perform the service execution method according to any possible implementation of any one of the foregoing aspects.

According to a third aspect, an embodiment of this application provides a computer storage medium, including computer instructions. When the computer instructions are run on an electronic device, the electronic device is enabled to perform the service execution method according to any possible implementation of any one of the foregoing aspects.

According to a fourth aspect, an embodiment of this application provides a computer program product. When the computer program product runs on an electronic device, the electronic device is enabled to perform the service execution method in any possible implementation of any one of the foregoing aspects.

For beneficial effects of the second aspect to the fourth aspect, refer to the beneficial effects of the first aspect.

### BRIEF DESCRIPTION OF DRAWINGS

FIG. 1A is a diagram of a device form of an electronic device 100 according to an embodiment of this application;
FIG. 1B is a diagram of a hardware structure of an electronic device 100 according to an embodiment of this application;
FIG. 2A is a diagram of a power supply circuit of a photoplethysmography (photoplethysmography, PPG) module according to an embodiment of this application;
FIG. 2B is a diagram of a relationship between a signal output by a CPU to a power supply switch and a voltage output by the power supply switch according to an embodiment of this application;
FIG. 3 is a schematic flowchart of a service execution method according to an embodiment of this application;
FIG. 4A is a schematic flowchart of a method for configuring a power supply 1 for a PPG module according to an embodiment of this application;
FIG. 4B is a schematic flowchart of a method for configuring a power supply 2 for a PPG module according to an embodiment of this application;
FIG. 5A and FIG. 5B are a schematic flowchart of another method for configuring a power supply for a PPG module and executing a service 1 according to an embodiment of this application;
FIG. 6A and FIG. 6B are a schematic flowchart of a method for executing a service 1 after a PPG module is powered on according to an embodiment of this application;
FIG. 7 is a diagram of a software architecture of an electronic device 100 according to an embodiment of this application; and
FIG. 8 is a schematic flowchart of a service execution method according to an embodiment of this application.

### DESCRIPTION OF EMBODIMENTS

The technical solutions according to embodiments of this application are clearly and completely described in the following with reference to the accompanying drawings. In descriptions of embodiments of this application, "/" indicates or, unless otherwise specified. For example, A/B may indicate A or B. In this specification, "and/or" describes only an association relationship between associated objects, and represents that three relationships may exist. For example, A and/or B may indicate the following three cases: Only A exists, both A and B exist, and only B exists. In addition, in descriptions of embodiments of this application, "a plurality of" means two or more than two.

In the following, the terms "first" and "second" are merely intended for a purpose of description, and shall not be understood as implying or implying relative importance or implicitly indicating a quantity of indicated technical features. Therefore, a feature limited by "first" and "second" may explicitly or implicitly include one or more features. In descriptions of embodiments of this application, unless otherwise specified, "a plurality of" means two or more.

A term "user interface (user interface, UI)" in the following embodiments of this application is a medium interface for interaction and information exchange between an application or an operating system and a user, and implements conversion between an internal form of information and a form acceptable to the user. The user interface is source code written in a specific computer language such as Java or an extensible markup language (extensible markup language, XML). Interface source code is parsed and rendered on an electronic device, and is finally presented as content that can be identified by the user. A frequently-used representation form of the user interface is a graphical user interface (graphical user interface, GUI), and is a user interface that is displayed in a graphical manner and that is related to a computer operation. The user interface may be a visual interface element such as a text, an icon, a button, a menu, a tab, a text box, a dialog box, a status bar, a navigation bar, or a widget that is displayed on a display of the electronic device.

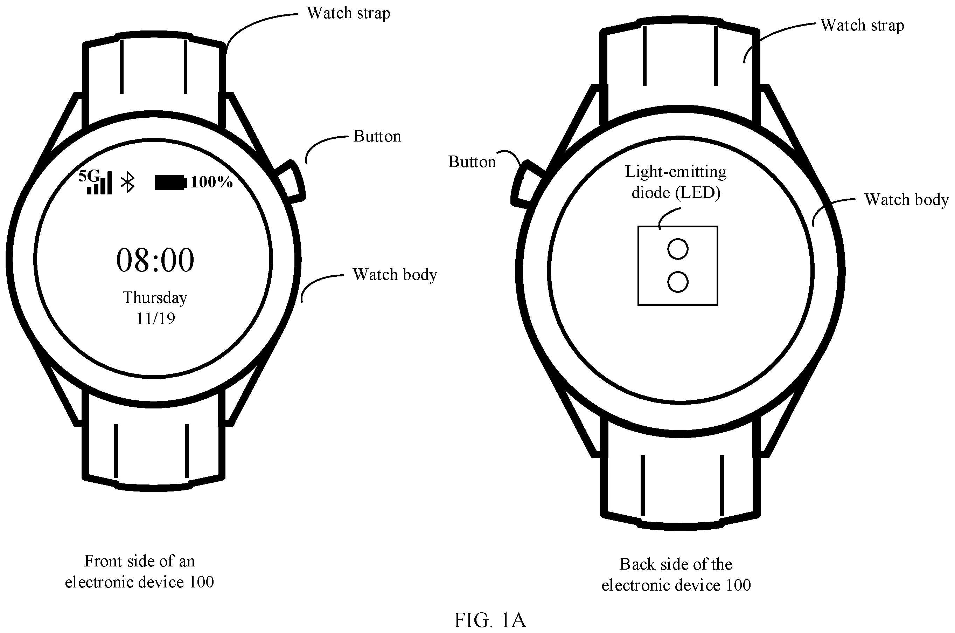

FIG. 1A is a diagram of a device form of an electronic device 100 according to an embodiment of this application.

As shown in FIG. 1A, the electronic device 100 may include a watch body and a watch strap. Optionally, one or more buttons may be further disposed on the watch body. A front side of the electronic device 100 may be a side that has a display, and a back side of the electronic device 100 may be a side that is close to skin of a user when the user wears the electronic device 100. One or more light-emitting diodes (light-emitting diode, LED) may be disposed on a back side of the watch body. The one or more LEDs may emit green, or may emit infrared light, or the like. In this way, when the user wears the electronic device 100, the electronic device 100 may emit infrared light and/or green to the skin of the user by using the one or more LEDs. In some other embodiments, the one or more LEDs may be replaced with another type of signal transmitter, and the signal transmitter may be configured to emit green and/or infrared light.

It may be understood that the embodiment shown in FIG. 1A is merely an example. In this embodiment of this application, the electronic device 100 may be a watch shown in FIG. 1A, or may be another wearable device such as a band, a ring, or smart glasses. A specific type of the electronic device 100 is not limited in this application.

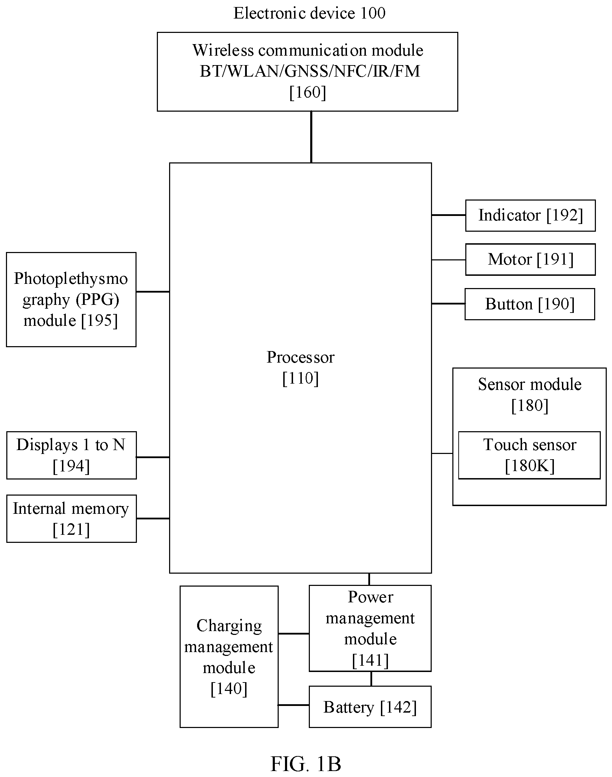

FIG. 1B is a diagram of a hardware structure of the electronic device 100.

The electronic device 100 may be a wearable device such as a watch, a band, a ring, or smart glasses. A specific type of the electronic device is not specially limited in embodiments of this application.

The electronic device 100 may include a processor 110, an internal memory 121, a charging management module 140, a power management module 141, a battery 142, a wireless communication module 160, a sensor module 180, a button 190, a motor 191, an indicator 192, a display 194, a photoplethysmography (photoplethysmography, PPG) module group 195, and the like. The sensor module 180 may include a touch sensor 180K, and optionally, may further include any one or more of the following sensors: a pressure sensor, a gyroscope sensor, a barometric pressure sensor, a magnetic sensor, an acceleration sensor, a distance sensor, an optical proximity sensor, a fingerprint sensor, a temperature sensor, an ambient light sensor, a bone conduction sensor, and the like.

It may be understood that the structure shown in this embodiment of the present invention does not constitute a specific limitation on the electronic device 100. In some other embodiments of this application, the electronic device 100 may include more or fewer components than those shown in the figure, or a combination of some components, or splits from some components, or a different component layout. The components shown in the figure may be implemented by hardware, software, or a combination of software and hardware.

The processor 110 may include one or more processing units, for example, a central processing unit (central processing unit, CPU), an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). In some embodiments, the processor 110 may also include a micro processing unit (microcontroller unit, MCU). Different processing units may be independent devices, or may be integrated into one or more processors.

The controller may generate an operation control signal based on an instruction operation code and a time sequence signal, to complete control of instruction fetching and instruction execution.

A memory may be further disposed in the processor 110, and is configured to store instructions and data. In some embodiments, the memory in the processor 110 is a cache. The memory may store instructions or data that has been used or is cyclically used by the processor 110. If the processor 110 needs to use the instructions or the data again, the processor 110 may directly invoke the instructions or the data from the memory. This avoids repeated access and reduces waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The GPIO interface may be configured by software. The GPIO interface may be configured as a control signal, or may be configured as a data signal. In some embodiments, the GPIO interface may be configured to connect the processor 110 to the display 194, the wireless communication module 160, the sensor module 180, or the like. The GPIO interface may alternatively be configured as an I2C interface, an I2S interface, a UART interface, an MIPI interface, or the like.

The charging management module 140 is configured to receive a charging input from a charger. The charger may be a wireless charger or a wired charger. In some embodiments of wireless charging, the charging management module 140 may receive a wireless charging input through a wireless charging coil of the electronic device 100. The charging management module 140 supplies power to the electronic device through the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

The wireless communication module 160 may provide a wireless communication solution that is applied to the electronic device 100, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more devices integrating at least one communication processing module.

The electronic device 100 may implement a display function by using the GPU, the display 194, the application processor, and the like. The GPU is a microprocessor for image processing, and is connected to the display 194 and the application processor. The GPU is configured to perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD). The display panel may be further manufactured by using an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The internal memory 121 may include one or more random access memories (random access memory, RAM) and one or more non-volatile memories (non-volatile memory, NVM). The random access memory may be directly read and written by the processor 110. The random access memory may be configured to store an operating system or an executable program (for example, machine instructions) of another running program, and may be further configured to store data of the user and an application, and the like. The non-volatile memory may also store an executable program, data of a user, data of an application, and the like, which may be loaded into the random access memory in advance for directly reading and writing by the processor 110.

The touch sensor 180K is also referred to as a "touch control device". The touch sensor 180K may be disposed on the display 194, and the touch sensor 180K and the display 194 constitute a touchscreen, which is also referred to as a "touch control screen". The touch sensor 180K is configured to detect a touch operation performed on or near the touch sensor. The touch sensor may transfer the detected touch operation to the application processor to determine a type of a touch event. A visual output related to the touch operation may be provided through the display 194. In some other embodiments, the touch sensor 180K may alternatively be disposed on a surface of the electronic device 100, and is located at a location different from that of the display 194.

The button 190 includes a power button, a volume button, and the like. The button 190 may be a mechanical button, or may be a touch button. The electronic device 100 may receive an input of the button, and generate a button signal input related to a user setting and function control of the electronic device 100.

The motor 191 may generate a vibration prompt. The motor 191 may be configured to provide an incoming call vibration prompt, or may be configured to provide a touch vibration feedback. For example, touch operations performed on different applications (for example, photographing and audio playback) may correspond to different vibration feedback effect. The motor 191 may also correspond to different vibration feedback effect for touch operations performed on different areas of the display 194. Different application scenarios (for example, a time reminder, information receiving, an alarm clock, and a game) may also correspond to different vibration feedback effect. Touch vibration feedback effect may be further customized.

The indicator 192 may be an indicator light, and may be configured to indicate a charging status and a power change, or may be configured to indicate a message, a missed call, a notification, and the like.

In some embodiments, the PPG module 195 may include an infrared (infrared, IR) device and a green (green) light device. The IR device may include an IR transmitter and an IR receiver. The IR transmitter may transmit an infrared signal, and the IR receiver may receive a reflected infrared signal. The green light device may include a green light emitter and a green light receiver (for example, a photosensitive sensor). The green light emitter may emit green light, and the green light receiver may receive reflected green light. In some embodiments, the PPG module 195 may further include a red light device. The red light device may emit red light, or may receive reflected red light. The PPG module 195 may execute a health monitoring service to measure a plurality of pieces of physiological data of the user, such as a body temperature, a heart rate, blood pressure, blood oxygen, sleep duration, and sleep quality. The PPG module 195 may further execute wear monitoring to monitor whether the user wears the electronic device 100. In some embodiments, the PPG module 195 may include the one or more LEDs shown in FIG. 1A, and the one or more LEDs may be used as the green light emitter and the IR transmitter.

The following describes a working principle of the photoplethysmography (photoplethysmography, PPG) module.

When light passes through skin tissues, the light is absorbed by bones, skin pigments, and veins and arterial blood. In addition, attenuation degrees of light of different wavelengths are different. Red light and near-infrared light pass through the skin tissues more easily than light of other wavelengths. Most of green light is absorbed by red blood cells in the blood, and the green light can be absorbed by oxyhemoglobin and deoxyhemoglobin. Therefore, a plurality of physiological parameters of a user, such as a heart rate, a body temperature, and blood pressure, may be determined based on emitted infrared light and detected attenuated infrared light. Based on emitted green light and detected attenuated green light, oxyhemoglobin and deoxyhemoglobin content in the blood of the user may be determined, or red blood cell content may be determined.

It can be learned from the embodiment shown in FIG. 1B that the PPG module 195 may include the IR device and the green light device. It can be learned from the foregoing features of the infrared light and the green light that the PPG module 195 may execute monitoring services such as wear monitoring and sleep monitoring by using the IR device, and may execute a blood oxygen monitoring service, a breathing training service, and the like by using the green light device.

It should be noted that a longer light wave indicates less energy of the light wave, and a wavelength of the infrared light is greater than a wavelength of the green light. Therefore, energy required for generating the infrared light is less than energy required for generating the green light. That is, power consumption of the IR device in the PPG module 195 is less than power consumption of the green light device.

An embodiment of this application provides a service execution method, applied to the electronic device 100. The electronic device 100 includes a processor, a power supply controller, and a PPG module. The PPG module includes an infrared device and a green light device. The method includes: when a first service is executed, controlling the power supply controller to provide a first voltage for the PPG module; controlling the processor to send a first control signal to the PPG module; and controlling the PPG module to turn on the green light device in response to the first control signal; and when a second service is executed, controlling the power supply controller to provide a second voltage for the PPG module; controlling the processor to send a second control signal to the PPG module; and controlling the PPG module to turn on the infrared device in response to the second control signal.

Because power consumption of the IR device is less than that of the green light device, when the IR device is needed but the green light device is not needed, supplying power to the PPG module by using a low-voltage power supply does not affect a monitoring result of the IR device. In this way, power consumption of the PPG module can be reduced, and a battery life capability of the electronic device 100 is improved.

The following describes a power supply circuit of the PPG module provided in an embodiment of this application.

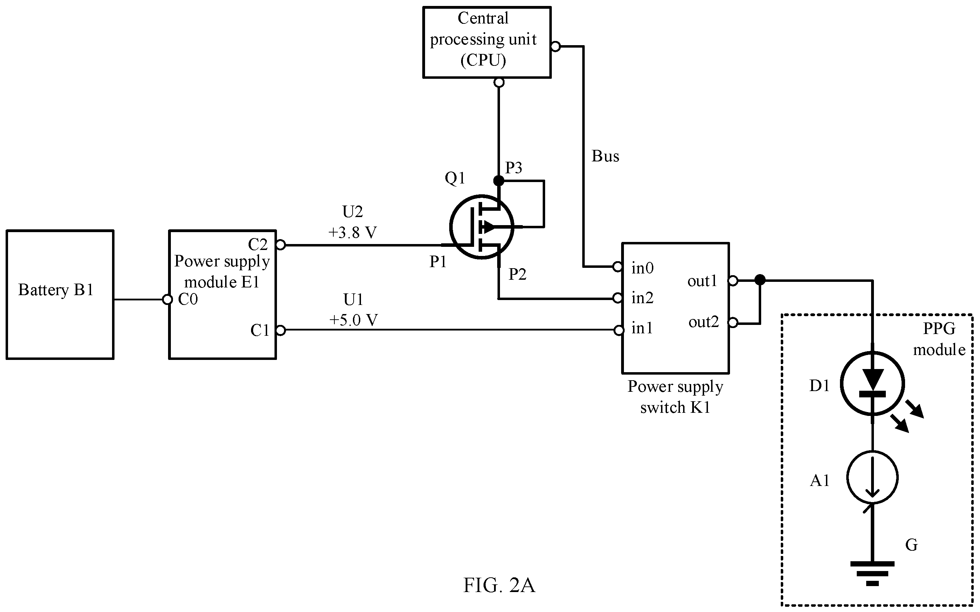

As shown in FIG. 2A, the power supply circuit of the PPG module may include a battery B1, a power supply module E1, a central processing unit (central processing unit, CPU), a low dropout regulator (low dropout regulator, LDO) Q1, a power supply switch K1, a light-emitting diode D1, and a current controlled current source A1.

The battery B1 may be connected to an input port of the power module E1.

The power module E1 may include one input port C0 and a plurality of output ports. The plurality of output ports may include an output port C1 and an output port C2. A boost circuit may be built in the power module, and the boost circuit may enable the output port C1 to output a voltage higher than a voltage at the input port C0. The other output port C2 of the power module may output a same voltage as the voltage at the input port C0. For example, the voltage output by the output port C1 may be +5.0 V, and the voltage output by the output port C2 may be +3.8 V. The voltage output by the output port C1 may be used as a power supply U1, and the voltage output by the output port C2 may be used as a power supply U2.

The power supply U1 may be connected to an input port in1 of the power supply switch K1, and the power supply U2 may be connected to an input port in2 of the power supply switch K1 through the low dropout regulator Q1. The power supply U2 may further be connected to the CPU and another module through the low dropout regulator Q1, to supply power to the CPU and the another module.

The low dropout regulator Q1 may be configured to stabilize a voltage. That is, a voltage at an input port of the low dropout regulator Q1 is within a specific voltage range (for example, 3.8 V to 4.2 V), and a voltage at an output port always keeps stable (for example, 3.6 V). In addition, a voltage difference between the input port and the output port of the low dropout regulator Q1 is very small. The low dropout regulator Q1 shown in FIG. 2A is a P-type LDO, and includes a PMOS transistor. The low dropout regulator Q1 may include three ports: an input port P1, an output port P2, and an output port P3. The input port P1 may be connected to the power supply U2; the output port P2 may be connected to the input port in2 of the power supply switch K1; and the output port P3 may be connected to the CPU to supply power to the CPU. The output port P3 may further be connected to another module, to supply power to the another module.

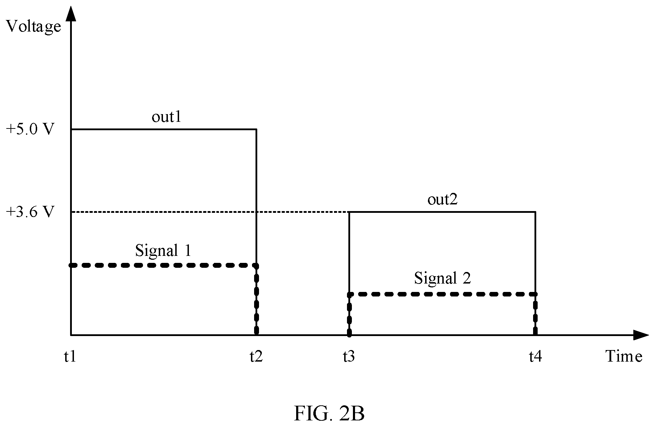

The power supply switch K1 may include a plurality of input ports and a plurality of output ports. The plurality of input ports of the power supply switch K1 may include in0, in1, and in2. In the plurality of input ports, in0 may be connected to the CPU through a bus, and the power supply switch K1 may receive, through the bus, a signal output by the CPU. The signal may be used to control an output of the power supply switch K1. For a specific manner in which the CPU controls the power supply switch K1 by using the output signal, refer to related descriptions in the following embodiment shown in FIG. 2B. Details are not described herein. in1 may be connected to the power supply U1, so that the power supply U1 is used as a power supply input of the power supply switch K1. in2 may be connected to the power supply U2 through the low dropout regulator Q1, so that the power supply U2 is used as another power supply input of the power supply switch K1. The plurality of output ports of the power supply switch K1 may include out1 and out2. Both out1 and out2 may be connected to a positive electrode of the light-emitting diode D1. A voltage output by out1 may be the same as a voltage of the power supply U1, and a voltage output by out2 may be close to a voltage of the power supply U2.

Both the light-emitting diode D1 and the current controlled current source A1 are devices in the PPG module. The light-emitting diode D1 may include the positive electrode and a negative electrode. The positive electrode may be connected to the output ports out1 and out2 of the power supply switch K1, and the negative electrode may be grounded through the current controlled current source A1. The current controlled current source A1 may also include an input port and an output port. The input port of the current controlled current source A1 may be connected to the negative electrode of the light-emitting diode D1, and the input port of the current controlled current source A1 may be grounded. The current controlled current source A1 may be configured to control a magnitude of a current flowing through the light-emitting diode D1 to prevent the light-emitting diode D1 from being burnt due to an excessively large current.

The CPU may be connected to the output port P3 of the low dropout regulator Q1, so that the power supply U2 can supply power to the CPU. The CPU may be further connected to the input port in0 of the power supply switch K1 through the bus, and send a signal to the power supply switch K1 through the bus, to control the output of the power supply switch K1. In some embodiments, the CPU may also be replaced with a micro processing unit (microcontroller unit, MCU).

It may be understood that a circuit diagram shown in FIG. 2A is merely an example provided in this application. In this embodiment of this application, the power supply U1 and the power supply U2 may also use voltages different from those in the foregoing embodiment. In addition, a circuit diagram for supplying power to the PPG module may further include more, fewer, or different devices than those in the foregoing embodiment, or a circuit diagram different from the circuit diagram in the foregoing embodiment is used. This is not limited in this application.

In some other embodiments, the power supply U1 and the power supply U2 may also be provided by two different batteries. This is not limited in this application.

The following describes a change of a voltage provided by the power supply switch K1 for the PPG module before and after the signal output by the CPU to the power supply switch K1 is switched.

As shown in FIG. 2B, a horizontal axis represents time, and a vertical axis represents a voltage value. In a time period from a moment t1 to a moment t2, the CPU may send a signal 1 to the power supply switch K1 through the bus. In a time period from a moment t3 to a moment t4, the CPU may send a signal 2 to the power supply switch K1 through the bus. A voltage of the signal 1 is higher than a voltage of the signal 2.

In the time period from the moment t1 to the moment t2, the power supply switch K1 may receive and respond to the signal 1, and output a voltage of +5.0 V through out1, but no voltage is output through out2. In the time period from the moment t3 to the moment t4, the power supply switch K1 may receive and respond to the signal 2, and output a voltage of +3.6 V through out2, but no voltage is output through out1.

In this way, the power supply switch K1 may implement power supply switching for the PPG module based on the signal output by the CPU.

It may be understood that the embodiment shown in FIG. 2B is merely an example. In some embodiments of this application, the voltage of the signal 2 may also be higher than the voltage of the signal 1. In some other embodiments, the signal 1 and the signal 2 may also be distinguished by using another parameter. This is not limited in this application.

The following describes a procedure of a service execution method provided in an embodiment of this application.

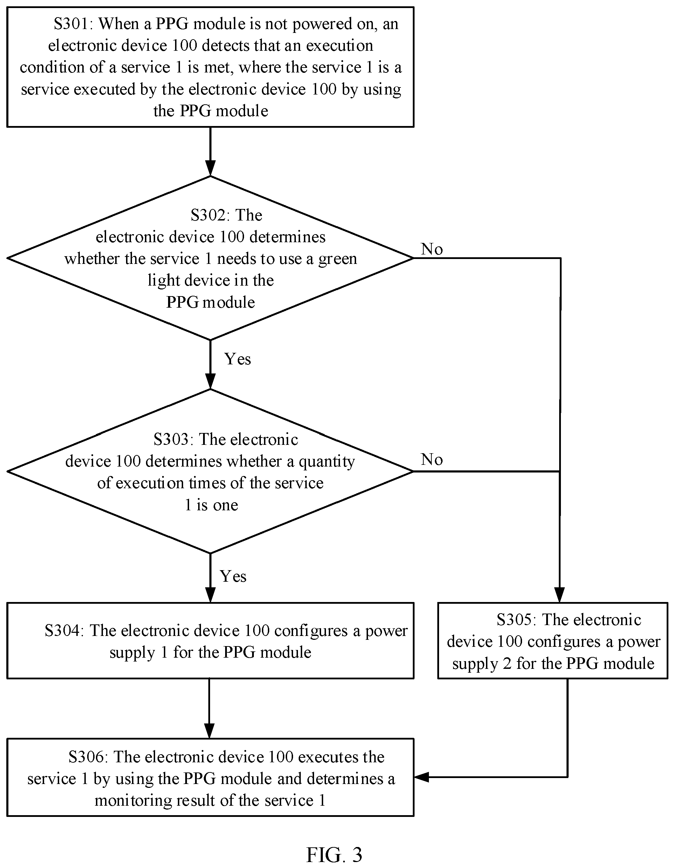

As shown in FIG. 3, a specific procedure of the service execution method provided in an embodiment of this application may include the following steps.

S301: When a PPG module is not powered on, an electronic device 100 detects that an execution condition of a service 1 is met, where the service 1 is a service executed by the electronic device 100 by using a PPG module.

The PPG module is the PPG module in the electronic device 100, that is, the PPG module 195 shown in FIG. 1B. That the PPG module is not powered on means that the electronic device 100 does not supply power to the PPG module.

Different services may correspond to different execution conditions, and the electronic device 100 may store correspondences between different services and execution conditions. For example, if the service 1 is a wear monitoring service, the execution condition of the service 1 may be that the electronic device 100 is started. If the service 1 is a sleep monitoring service, the execution condition of the service 1 may be that the electronic device 100 receives an operation of enabling sleep monitoring by a user in a Health application. For another example, if the service 1 is a heart rate monitoring service, the execution condition of the service 1 may be receiving an operation of enabling heart rate monitoring by a user, or may be detecting that the electronic device 100 is started and is in an intelligent heart rate monitoring mode, or the like. It may be understood that this embodiment herein is merely an example. In this embodiment of this application, the service 1 may alternatively be a service different from the services in the foregoing embodiment, and the execution condition of the service 1 may alternatively be an execution condition different from the execution conditions in the foregoing embodiment. This is not limited in this application.

When detecting that the execution condition of the service 1 is met, the electronic device 100 may perform the following step S302.

S302: The electronic device 100 determines whether the service 1 needs to use a green light device in the PPG module.

In some embodiments, the electronic device 100 may store correspondences between services and devices in the PPG module that the services need to use.

For example, Table 1 lists the correspondences between the services and the devices that the services need to use according to an embodiment of this application.

**Table 1**

| Service name | Device in the PPG module that a service needs to use |
|---|---|
| Wear monitoring | IR device |
| Sleep monitoring | IR device |
| Blood oxygen monitoring | Green light device |
| Breathing training | Green light device |

As listed in Table 1, when the electronic device 100 executes different services by using the PPG module, the devices in the PPG module that the services need to use may be different. For example, when the electronic device 100 executes the wear monitoring service or the sleep monitoring service, only the IR device in the PPG module needs to be used. When the electronic device 100 executes the blood oxygen monitoring service or the breathing training service, only the green light device in the PPG module needs to be used.

It may be understood that the embodiment listed in Table 1 is merely an example. In this embodiment of this application, services that can be executed by the electronic device 100 may further include more or fewer services than those in the foregoing embodiment, or different services than those in the foregoing embodiment. This is not limited in this application.

The electronic device 100 may determine, based on the correspondences between the services and the devices in the PPG module that the services need to use, whether the service 1 needs to use the green light device in the PPG module.

If devices in the PPG module that need to be used to execute the service 1 include the IR device but do not include the green light device, the electronic device 100 may perform the following step S305 to configure a power supply 2 for the PPG module.

In some embodiments, if the devices in the PPG module that need to be used to execute the service 1 include the green light device, the electronic device 100 may perform the following step S304 to configure a power supply 1 for the PPG module.

In some other embodiments, if the devices in the PPG module that need to be used to execute the service 1 include the green light device, the electronic device 100 may alternatively perform the following step S303.

S303: The electronic device 100 determines whether a quantity of execution times of the service 1 is one.

Step S303 is an optional step.

A quantity of execution times of a service may include one and a plurality of times. The quantity of execution times of the service indicates whether to end the service after the service is executed once. If the quantity of execution times of the service is one, after it is detected that an execution condition of the service is met, the electronic device 100 may end the service after executing the service once. If the quantity of execution times of the service is a plurality of times, after it is detected that the execution condition of the service is met, the electronic device 100 may execute the service for a plurality of times.

In some embodiments, the electronic device 100 may store correspondences between service names and quantities of execution times of the services. For example, a quantity of execution times of the wear monitoring service is a plurality of times, and a quantity of execution times of the breathing training service is one. After detecting that an execution condition of a service is met, the electronic device 100 may determine, based on a service name of the service, whether a quantity of execution times of the service is one.

In some embodiments, the service 1 may correspond to different execution conditions, including an execution condition 1 and an execution condition 2. When the execution condition 1 is met, the quantity of execution times of the service 1 may be a plurality of times. When the execution condition 2 is met, the quantity of execution times of the service 1 may be one. In this case, the electronic device 100 may store correspondences between a service name, execution conditions, and quantities of execution times.

For example, Table 2 lists the correspondences, stored in the electronic device 100, between the service name, the execution conditions, and the quantities of execution times.

**Table 2**

| Service name | Execution condition | Quantity of execution times |
|---|---|---|
| Heart rate monitoring | The intelligent heart rate monitoring mode is enabled. | A plurality of times |
| Heart rate monitoring | An operation of measuring a heart rate by the user is received. | One |

As listed in Table 2, the electronic device 100 may store the correspondences between the service name, the execution conditions, and the quantities of execution times. For example, the electronic device 100 may be triggered to execute the heart rate monitoring service when the intelligent heart rate monitoring mode is enabled or the operation of measuring the heart rate by the user is received. When the intelligent heart rate monitoring mode is enabled, the quantity of execution times of the heart rate monitoring service may be a plurality of times. When the operation of measuring the heart rate by the user is received, the quantity of execution times of the heart rate monitoring service may be one.

It may be understood that Table 2 is merely an example. In this embodiment of this application, the electronic device 100 may further store more, fewer, or different correspondences between service names, execution conditions, and quantities of execution times than those in the foregoing embodiment. This is not limited in this application.

The electronic device 100 may determine, based on the execution condition detected in step S301 and the stored correspondence between the execution condition of the service 1 and the quantity of execution times, whether the quantity of execution times of the to-be-executed service 1 is one.

If the quantity of execution times of the service 1 is one, the electronic device 100 may perform the following step S304.

If the quantity of execution times of the service 1 is not one, the electronic device 100 may perform the following step S305.

S304: The electronic device 100 configures the power supply 1 for the PPG module.

A voltage of the power supply 1 is higher than a voltage of the power supply 2. In some embodiments, the power supply 1 may be a constant-voltage power supply (for example, a constant-voltage power supply of 5 V), and the power supply 2 may be a low-voltage power supply (for example, a dynamic low-voltage power supply from 3.6 V to 4.2 V).

In some embodiments, the power supply 1 and the power supply 2 may be two power supplies provided by a same battery in the electronic device 100. For example, the power supply 1 may be the power supply U1 in the embodiment shown in FIG. 2A, and the power supply 2 may be the power supply U2 in the embodiment shown in FIG. 2A. In some embodiments, the voltage of the power supply 2 may be the same as a voltage of the battery in the electronic device 100. The battery may supply power to a plurality of devices such as a processor in the electronic device 100. In addition, the voltage of the power supply 2 dynamically changes based on a battery level. For example, when the battery level is 100%, the voltage provided by the power supply 2 for the PPG module is 4.2 V; when the battery level is almost exhausted, the voltage provided by the power supply 2 for the PPG module is 3.6 V; and the like. The power supply 1 may supply power to devices such as the PPG module and an NFC module.

In some other embodiments, the power supply 1 and the power supply 2 may alternatively be two independent power supplies, for example, power supplies respectively provided by two different batteries in the electronic device 100.

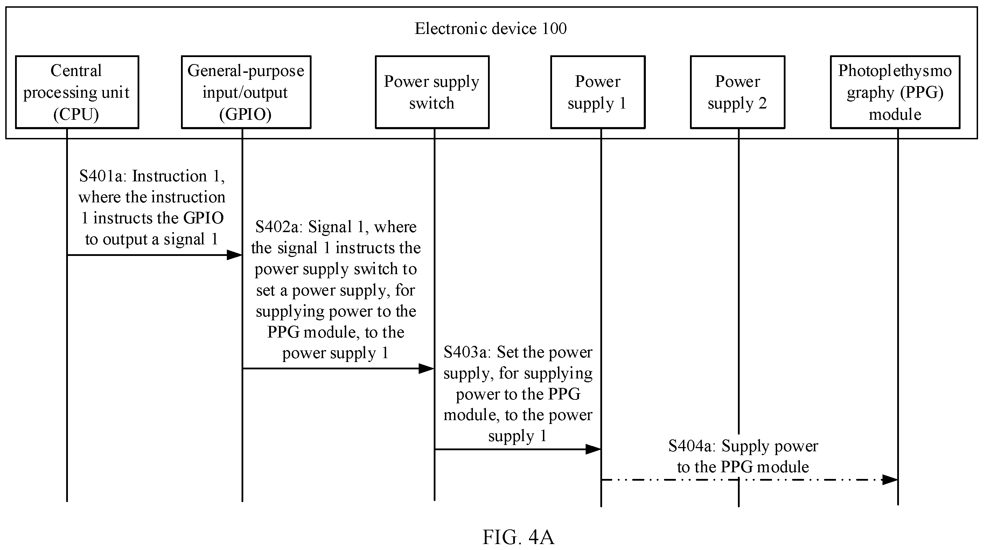

FIG. 4A is a schematic flowchart of configuring the power supply 1 for the PPG module by the electronic device 100 according to an embodiment of this application.

As shown in FIG. 4A, the electronic device 100 may include a central processing unit (CPU), a general-purpose input/output (general-purpose input/output, GPIO), a power supply switch, the power supply 1, the power supply 2, and the PPG module. In a process in which the electronic device 100 configures the power supply 1 for the PPG module, a specific procedure of interaction between devices may include the following steps.

S401a: The central processing unit sends an instruction 1 to the GPIO, where the instruction 1 instructs the GPIO to output a signal 1.

S402a: The GPIO outputs the signal 1 to the power supply switch, where the signal 1 instructs the power supply switch to set a power supply, for supplying power to the PPG module, to the power supply 1.

S403a: The power supply switch sets the power supply, for supplying power to the PPG module, to the power supply 1.

S404a: The power supply 1 supplies power to the PPG module.

It should be noted that in the embodiment shown in FIG. 4A, for circuit connections between the CPU, the power supply switch, the power supply 1, the power supply 2, and the PPG module of the electronic device 100, refer to related descriptions in the embodiment shown in FIG. 2A.

S305: The electronic device 100 configures the power supply 2 for the PPG module.

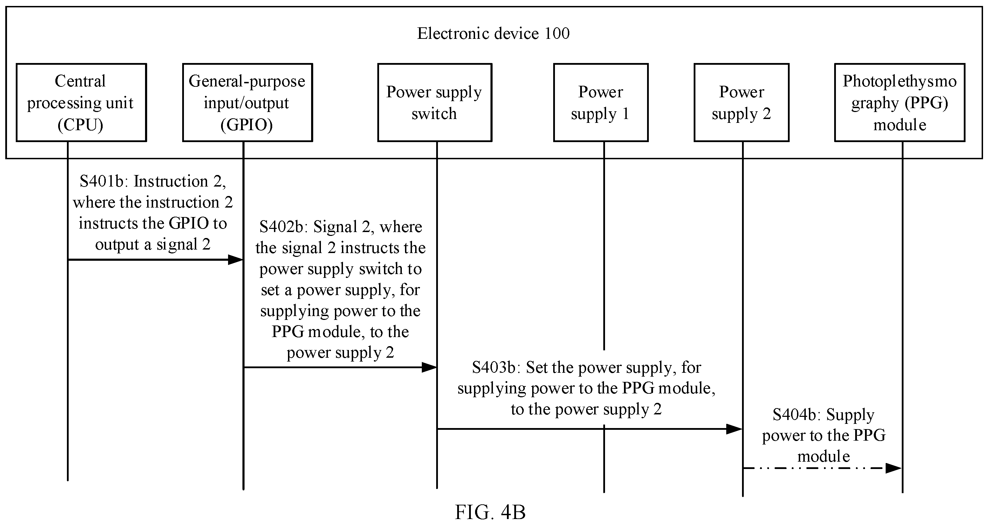

FIG. 4B is a schematic flowchart of configuring the power supply 2 for the PPG module by the electronic device 100 according to an embodiment of this application.

As shown in FIG. 4B, the electronic device 100 may include a central processing unit (CPU), a general-purpose input/output (general-purpose input/output, GPIO), a power supply switch, the power supply 1, the power supply 2, and the PPG module. In a process in which the electronic device 100 configures the power supply 2 for the PPG module, a specific procedure of interaction between devices may include the following steps.

S401b: The central processing unit sends an instruction 2 to the GPIO, where the instruction 2 instructs the GPIO to output a signal 2.

S402b: The GPIO outputs the signal 2 to the power supply switch, where the signal 2 instructs the power supply switch to set a power supply, for supplying power to the PPG module, to the power supply 2.

S403b: The power supply switch sets the power supply, for supplying power to the PPG module, to the power supply 2.

S404b: The power supply 2 supplies power to the PPG module.

It should be noted that in the embodiment shown in FIG. 4B, for circuit connections between the CPU, the power supply switch, the power supply 1, the power supply 2, and the PPG module of the electronic device 100, refer to related descriptions in the embodiment shown in FIG. 2A.

S306: The electronic device 100 executes the service 1 by using the PPG module, and determines the monitoring result of the service 1.

In this embodiment of this application, that the electronic device 100 executes the service 1 by using the PPG module means that original data related to the service 1 is collected by using the PPG module. Determining the monitoring result of the service 1 means that the CPU of the electronic device 100 determines the monitoring result of the service 1 based on the original data of the service 1 by using a stored related algorithm of the service 1.

If the quantity of execution times of the service 1 is a plurality of times, after the PPG module is powered on, the electronic device 100 may execute the service 1 for a plurality of times by using the PPG module, and determine a monitoring result of current monitoring each time after the service 1 is executed.

If the quantity of execution times of the service 1 is one, after the PPG module is powered on, the electronic device 100 may execute the service 1 once by using the PPG module, and determine the monitoring result of the service 1.

After obtaining the monitoring result of the service 1, the electronic device 100 may store the monitoring result of the service 1. In addition, when an output condition (for example, an operation of viewing the monitoring result of the service 1 by the user is detected, or it is detected that a current moment is a preset output moment) of the service 1 is met, the electronic device 100 outputs the monitoring result of the service 1.

According to the service execution method provided in this application, when only the IR device needs to be used, the electronic device 100 may configure the low-voltage power supply for the PPG module, to reduce power consumption. Optionally, when an executed service is a background always-on service, the electronic device 100 may further configure the low-voltage power supply for the PPG module, to reduce power consumption. In this way, a battery life capability of the electronic device 100 can be improved.

In some embodiments, when the electronic device 100 configures a power supply for the PPG module, the power supply may fail to be configured due to a running error of an internal instruction, water ingress into the device, damage to some devices, or the like. When the power supply fails to be configured, the electronic device 100 may configure the power supply for a plurality of times, or may configure another power supply for the PPG module.

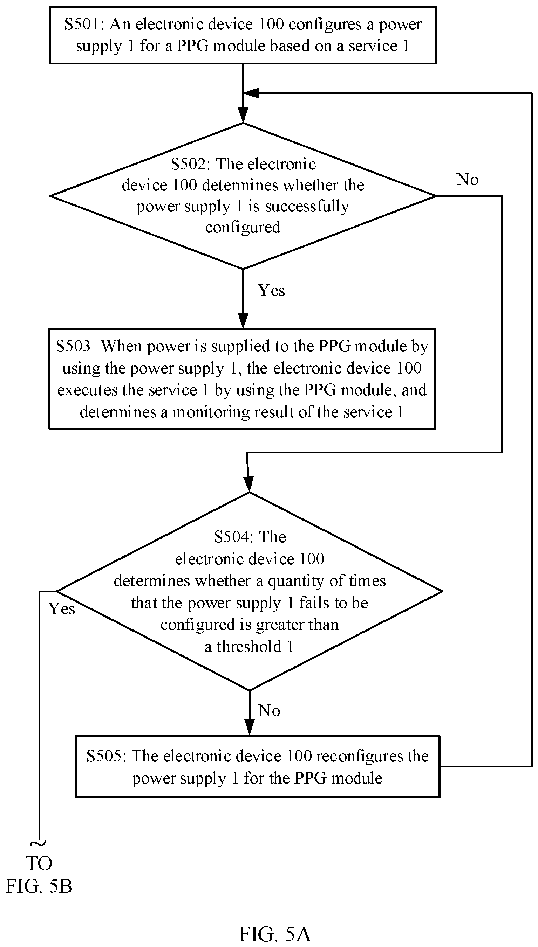

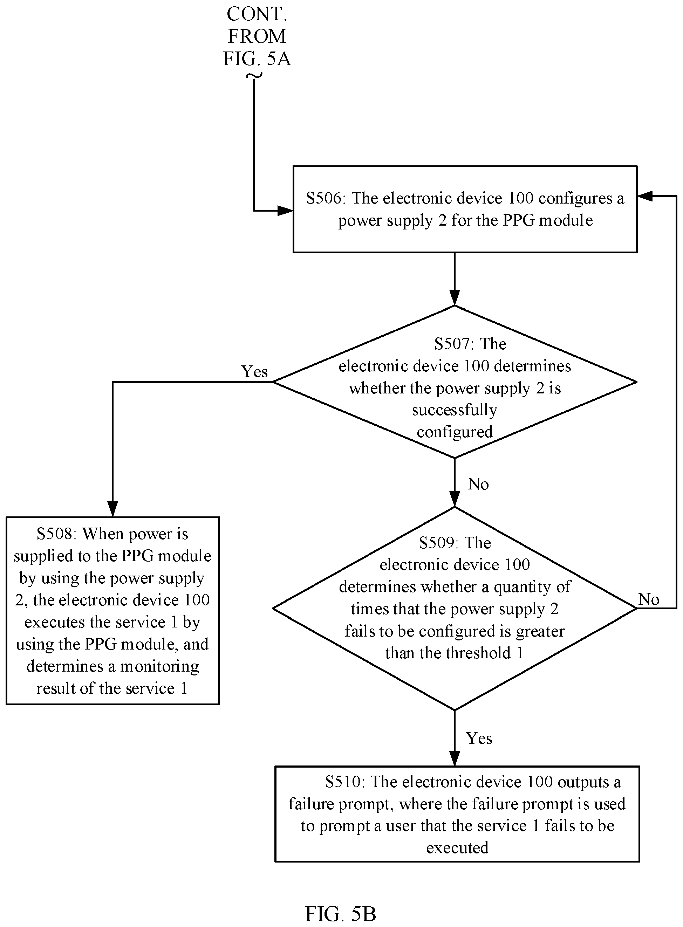

For example, FIG. 5A and FIG. 5B are a schematic flowchart of another method for configuring a power supply for the PPG module and executing a service by the electronic device 100 according to an embodiment of this application.

As shown in FIG. 5A and FIG. 5B, when the PPG module is not powered on, and the execution condition of the service 1 is met, a specific procedure in which the electronic device 100 configures the power supply for the PPG module and executes the service 1 may include the following steps.

S501: The electronic device 100 configures the power supply 1 for the PPG module based on the service 1.

When detecting that the execution condition of the service 1 is met, the electronic device 100 may determine, based on the service 1, the power supply configured for the PPG module. After determining that the power supply configured for the service 1 is the power supply 1, the electronic device 100 may configure the power supply 1 for the PPG module. For the execution condition of the service 1 and a specific step of determining the configured power supply based on the service 1, refer to the related steps in the embodiment shown in FIG. 3. For a manner in which the electronic device 100 configures the power supply 1 for the PPG module, refer to related steps in the embodiment shown in FIG. 4A.

S502: The electronic device 100 determines whether the power supply 1 is successfully configured.

That the power supply 1 fails to be configured means that in a configuration process of the power supply 1, the CPU (or an MCU) receives an error reported by a device. In this case, the power supply 1 cannot supply power to the PPG module, and the PPG module fails to be powered on.

The power supply may fail to be configured when a software error occurs, or when a hardware error occurs. The software error is an instruction running error in a power supply configuration process, for example, an instruction running failure caused by incomplete configuration of another associated module. The hardware error is an instruction running error caused by a hardware problem (for example, a hardware process problem or a hardware damage problem) in a process in which the electronic device 100 initializes related devices such as the power supply and the PPG module after the power supply configuration is completed. For example, when a hardware process of some devices in the related devices is insufficient, there is a specific probability (for example, one-thousandth) that the instruction may fail to be run in the initialization process. For another example, when water enters the electronic device 100, or a part of related devices are damaged, the instruction in the initialization process may also fail to be executed.

Regardless of whether the hardware error or the software error occurs, when the power supply 1 fails to be configured, the CPU (or the MCU) of the electronic device 100 may receive an error code reported by the device, and the electronic device 100 may determine, based on whether the error code is received, whether the power supply 1 fails to be configured.

If determining that the power supply 1 is successfully configured, the electronic device 100 may perform the following step S503.

If determining that the power supply 1 fails to be configured, the electronic device 100 may perform the following step S504.

S503: When power is supplied to the PPG module by using the power supply 1, the electronic device 100 executes the service 1 by using the PPG module, and determines a monitoring result of the service 1.

In this way, when the power supply 1 is successfully configured, the electronic device 100 may execute the service 1 by using the PPG module, and determine the monitoring result of the service 1.

S504: The electronic device 100 determines whether a quantity of times that the power supply 1 fails to be configured is greater than a threshold 1.

The threshold 1 may be a preset quantity of times, for example, three times or five times.

If the quantity of times that the power supply 1 fails to be configured is less than or equal to the threshold 1, the electronic device 100 may perform the following step S505.

If the quantity of times that the power supply 1 fails to be configured is greater than the threshold 1, the electronic device 100 may perform the following step S506.

S505: The electronic device 100 reconfigures the power supply 1 for the PPG module.

After performing step S505, the electronic device 100 may perform step S502 to determine whether the power supply 1 is successfully configured this time.

S506: The electronic device 100 configures the power supply 2 for the PPG module.

For a specific step in which the electronic device 100 configures the power supply 2 for the PPG module, refer to related steps in the embodiment shown in FIG. 4B.

S507: The electronic device 100 determines whether the power supply 2 is successfully configured.

For a manner in which the electronic device 100 determines whether the power supply 2 is successfully configured, refer to the manner of determining whether the power supply 1 is successfully configured in step S502.

If determining that the power supply 2 is successfully configured, the electronic device 100 may perform the following step S508.

If determining that the power supply 2 fails to be configured, the electronic device 100 may perform the following step S509.

S508: When power is supplied to the PPG module by using the power supply 2, the electronic device 100 executes the service 1 by using the PPG module, and determines the monitoring result of the service 1.

In this way, when the power supply 2 is successfully configured, the electronic device 100 may execute the service 1 by using the PPG module, and determine the monitoring result of the service 1.

S509: The electronic device 100 determines whether a quantity of times that the power supply 2 fails to be configured is greater than the threshold 1.

If the quantity of times that the power supply 1 fails to be configured is less than or equal to the threshold 1, the electronic device 100 may perform the foregoing step S506.

If the quantity of times that the power supply 1 fails to be configured is greater than the threshold 1, the electronic device 100 may perform the following step S510.

S510: The electronic device 100 outputs a failure prompt, where the failure prompt is used to prompt the user that the service 1 fails to be executed.

The failure prompt may be in any one or more manners such as a text, a pattern, an animation, vibration, and a sound.

In some embodiments, the failure prompt may be further used to prompt the user to perform measurement again, or may be used to prompt the user to tighten the electronic device that the user wears and then perform measurement again.

In some embodiments, after outputting the failure prompt, the electronic device 100 may receive and respond to a re-measurement operation of the user, reconfigure a power supply for the PPG module, and execute the service 1.

According to the service execution method provided in this embodiment of this application, when a power supply fails to be configured, the electronic device 100 may temporarily configure another power supply for the PPG module, to ensure normal service execution and avoid affecting use by the user.

It may be understood that the embodiment shown in FIG. 5A and FIG. 5B is merely an example for description. When the power supply fails to be configured for the PPG module, the electronic device 100 may configure another power supply for the PPG module. In this embodiment of this application, if the power supply corresponding to the service 1 is the power supply 2, and the power supply 2 fails to be configured, the electronic device 100 may alternatively configure the power supply 1 for the PPG module. For a specific procedure, refer to related steps in the embodiment shown in FIG. 5A and FIG. 5B. This is not limited in this application.

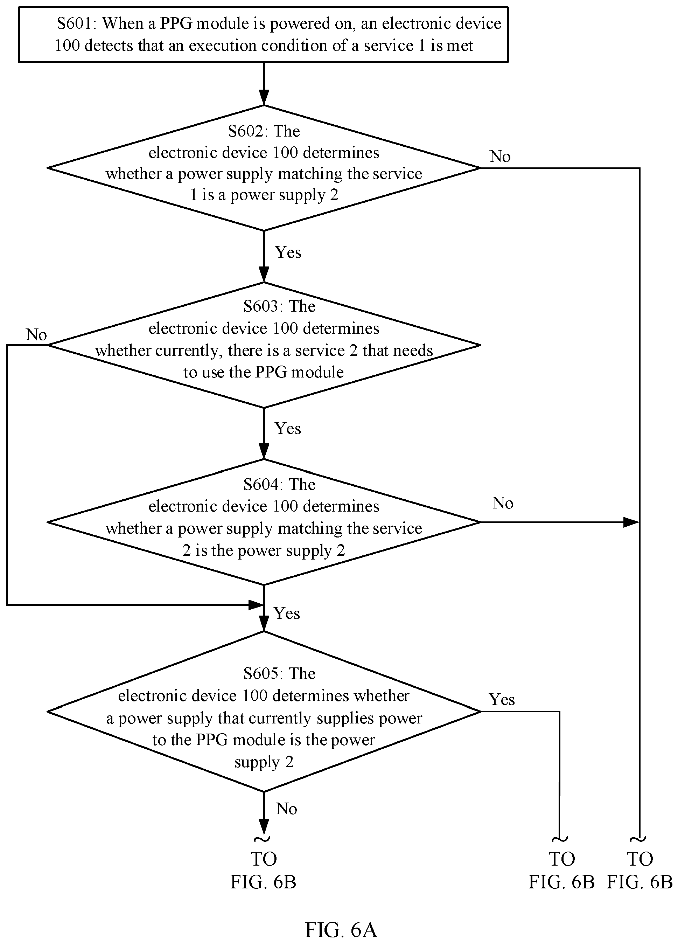

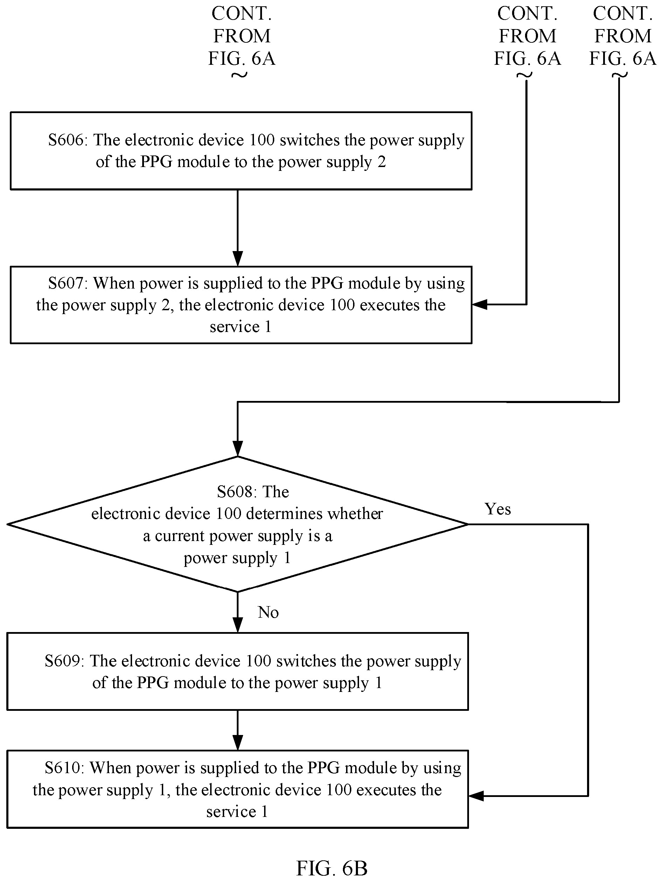

In some embodiments, after the power supply is configured, if the power supply configured by the electronic device 100 for the PPG module does not match the service 1, after detecting that an execution condition of another service (for example, a service 2) is met, the electronic device 100 may re-determine, based on the service 2, whether to switch the power supply of the PPG module. For example, if the IR device needs to be used but the green light device is not used to execute the service 1, and after the power supply is configured, the power supply configured by the electronic device 100 for the PPG module is the power supply 1, after detecting that the execution condition of the another service (for example, the service 2) is met, the electronic device 100 may re-determine, based on the service 2, whether to switch the power supply of the PPG module. It should be noted that for a matching relationship between a service and a power supply, refer to related descriptions in FIG. 3 or in the following step S602 shown in FIG. 6A and FIG. 6B.

In some other embodiments, after the power supply is configured, if the power supply configured by the electronic device 100 for the PPG module does not match the service 1, and the quantity of execution times of the service 1 is a plurality of times, the electronic device 100 may switch the power supply of the PPG module again based on the service 1 when the service 1 is executed next time (or when detecting that previous power supply configuration time is greater than preset duration).

The following describes a procedure of a method for executing the service 1 by the electronic device 100 when the PPG module is powered on according to an embodiment of this application.

As shown in FIG. 6A and FIG. 6B, when the PPG module is powered on, the specific procedure in which the electronic device 100 executes the service 1 may include the following steps.

S601: When the PPG module is powered on, the electronic device 100 detects that the execution condition of the service 1 is met.

The electronic device 100 needs to use the PPG module when executing the service 1.

For the execution condition of the service 1, refer to related content in step S301 shown in FIG. 3.

S602: The electronic device 100 determines whether a power supply matching the service 1 is the power supply 2.

For specific content of the power supply 1 and the power supply 2, refer to related descriptions in the foregoing embodiment.

In some embodiments, the electronic device 100 determines, based on whether the service 1 needs to use the green light device in the PPG module, whether the power supply matching the service 1 is the power supply 1. If the green light device in the PPG module needs to be used to execute the service 1, it is determined that the power supply matching the service 1 is the power supply 1. If the IR device in the PPG module needs to be used to execute the service 1, but the green light device does not need to be used, it is determined that the power supply matching the service 1 is the power supply 2.

In some other embodiments, the electronic device 100 may alternatively determine, based on a device in the PPG module used for executing the service 1 and whether the quantity of execution times of the service 1 is one, the power supply matching the service 1. If the IR device in the PPG module needs to be used to execute the service 1, but the green light device does not need to be used, it is determined that the power supply matching the service 1 is the power supply 2. If the green light device in the PPG module needs to be used to execute the service 1, and the quantity of execution times of the service 1 is one, it is determined that the power supply matching the service 1 is the power supply 1. If the green light device in the PPG module needs to be used to execute the service 1, and the quantity of execution times of the service 1 is a plurality of times, it is determined that the power supply matching the service 1 is the power supply 2. For a manner of determining whether the quantity of execution times of the service 1 is one, refer to related descriptions in the embodiment shown in FIG. 3. Details are not described herein again.

If the power supply matching the service 1 is the power supply 2, the electronic device 100 may perform the following step S603.

If the power supply matching the service 1 is not the power supply 2, the electronic device 100 may perform the following step S608.

S603: The electronic device 100 determines whether currently, there is the service 2 that needs to use the PPG module.

The service 2 is a service that is to be executed or is being executed.

If there is the service 2 that needs to use the PPG module, the electronic device 100 may perform the following step S604.

If there is not the service 2 that needs to use the PPG module, the electronic device 100 may perform the following step S605.

S604: The electronic device 100 determines whether a power supply matching the service 2 is the power supply 2.

For a specific manner in which the electronic device 100 determines the power supply matching the service 2, refer to related content in step S602.

If the power supply matching the service 2 is the power supply 2, the electronic device 100 may perform the following step S605.

If the power supply matching the service 2 is not the power supply 2, the electronic device 100 may perform the following step S608.

S605: The electronic device 100 determines whether a power supply that currently supplies power to the PPG module is the power supply 2.

If the power supply that currently supplies power to the PPG module is not the power supply 2, the electronic device 100 may perform the following step S606.

If the power supply that currently supplies power to the PPG module is the power supply 2, the electronic device 100 may perform the following step S607.

S606: The electronic device 100 switches the power supply of the PPG module to the power supply 2.

S607: When power is supplied to the PPG module by using the power supply 2, the electronic device 100 executes the service 1.

In this case, if there are services that need to be executed by using the PPG module, the electronic device 100 may also execute these services in a process of executing the service 1.

S608: The electronic device 100 determines whether a current power supply is the power supply 1.

If the power supply that currently supplies power to the PPG module is not the power supply 1, the electronic device 100 may perform the following step S609.

If the power supply that currently supplies power to the PPG module is the power supply 1, the electronic device 100 may perform the following step S610.

S609: The electronic device 100 switches the power supply of the PPG module to the power supply 1.

S610: When power is supplied to the PPG module by using the power supply 1, the electronic device 100 executes the service 1.

In this case, if there are services that need to be executed by using the PPG module, the electronic device 100 may also execute these services in a process of executing the service 1.

The following describes a software architecture of the electronic device 100 according to an embodiment of this application.

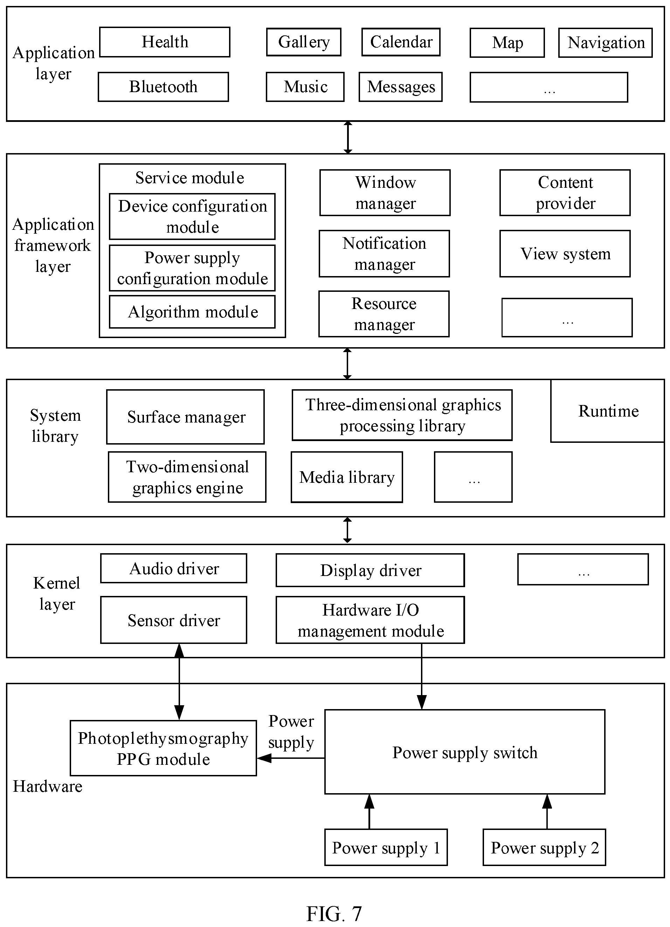

For example, as shown in FIG. 7, a software system of the electronic device 100 may use a layered architecture. In the layered architecture, software is divided into several layers, and each layer has a clear role and responsibility. The layers communicate with each other through a software interface. In some embodiments, a software architecture of the electronic device 100 may include four layers: an application layer, an application framework layer, a runtime (runtime) and system library, and a kernel layer from top to bottom.

The application layer may include a series of application packages, for example, applications such as Health, Gallery, Calendar, Map, Navigation, Bluetooth, Music, and Messages.

The application framework layer may include a service module. The service module may include a device configuration module, a power supply configuration module, and an algorithm module. The application framework layer may further include a window manager, a content provider, a view system, a resource manager, a notification manager, and the like.

The window manager is configured to manage a window program. The window manager may obtain a size of a display, determine whether there is a status bar, perform screen locking, take a screenshot, and the like.

The content provider is configured to: store and obtain data, and make the data accessible to an application. The data may include a video, an image, an audio, calls that are made and answered, a browsing history and bookmarks, an address book, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The resource manager provides various resources such as a localized character string, an icon, an image, a layout file, and a video file for an application.

The notification manager enables an application to display notification information in the status bar, and may be configured to convey a notification message. The notification manager may automatically disappear after a short pause without requiring user interaction. For example, the notification manager is configured to: notify download completion, provide a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is displayed in the status bar, an alert tone is played, the electronic device vibrates, or an indicator light blinks.

The runtime includes a core library and a virtual machine. The runtime is responsible for scheduling and management of an operating system.

The core library includes two parts: a function that needs to be invoked in a Java language, and a core library of the operating system (for example, Android).

The application layer and the application framework layer run on the virtual machine. The virtual machine executes Java files at the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a 2D graphics engine (for example, SGL).

The surface manager is configured to manage a display subsystem and provide a fusion of 2D and 3D layers for a plurality of applications.

The media library supports playback and recording in a plurality of commonly used audio and video formats, and static image files. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering and composition, layer processing, and the like.

The 2D graphics engine is a drawing engine for 2D drawing.

The kernel layer is a layer between hardware and software. The kernel layer may include a driver module. The driver module may include one or more drivers, for example, a display driver, an audio driver, a sensor driver, and a hardware I/O management module.

A software module of the electronic device 100 may interact with a hardware module of the electronic device 100 through the kernel layer. The hardware module of the electronic device 100 may include a power supply switch, a power supply 1, a power supply 2, a PPG module, and the like.

When the service execution method provided in this embodiment of this application is performed, the sports and health application (herein after referred to as Health application) at the application layer may receive and respond to an operation of a user, determine a to-be-executed service 1, and send a service execution instruction to the service module. The service execution instruction instructs the service module to configure, based on the service 1, a device in the PPG module that needs to be used and a power supply that supplies power to the PPG module.

The service module at the application framework layer may receive the service execution instruction sent by the Health application. After receiving the service execution instruction sent by the Health application, a device configuration module in the service module may determine the device in the PPG module that needs to be used to execute the service 1, and send a configuration instruction to the sensor driver at the kernel layer. The configuration instruction may include the device in the PPG module that needs to be used to execute the service 1, and the configuration instruction instructs the sensor driver to configure the device in the PPG module that needs to be used. The device configuration module may further determine the device in the PPG module that the service 1 needs to use, and optionally, may further determine whether a quantity of execution times of the service 1 is one. Then, the device configuration module may further send a determining result to the power supply configuration module. The power supply configuration module may determine, based on the determining result sent by the device configuration module, the power supply configured for the PPG module. For example, if the service 1 needs to use an IR device in the PPG module but does not need to use a green light device, the power supply configuration module determines that the power supply 2 is configured for the PPG module; if the service 1 needs to use the green light device in the PPG module, the power supply configuration module determines that the power supply 1 is configured for the PPG module; and the like. After determining the power supply configured for the PPG module, the power supply configuration module may send a power supply configuration instruction to the hardware I/O management module at the kernel layer. The power supply configuration instruction instructs the hardware I/O management module to configure a specified power supply for the PPG module. The algorithm module may store one or more service algorithms, for example, a sleep monitoring algorithm, a wear monitoring algorithm, and a heart rate monitoring algorithm. The algorithm module may receive data that is of the service 1 and that is sent by the sensor driver, and determine a monitoring result of the service 1 based on the data of the service 1 by using an algorithm of the service 1.

The sensor driver at the kernel layer may receive and respond to the configuration instruction sent by the device configuration module, to configure a device in the PPG module that needs to be used. The sensor driver may further receive the data that is of the service 1 and that is sent by the PPG module, and send the data of the service 1 to the algorithm module. The hardware I/O management module may receive and respond to the power configuration instruction sent by the power configuration module, and configure, for the PPG module, the power supply specified in the power configuration instruction. In some embodiments, if the power configuration instruction instructs the hardware I/O management module to configure the power supply 1 for the PPG module, the hardware I/O management module may send a high-level signal to the power supply switch; if the power configuration instruction instructs the hardware I/O management module to configure the power supply 2 for the PPG module, the hardware I/O management module may send a low-level signal to the power supply switch; and the like. The hardware I/O management module may be the GPIO in the embodiments shown in FIG. 4A and FIG. 4B.

It may be understood that the embodiment shown in FIG. 7 is merely an example. In this embodiment of this application, the software architecture of the electronic device 100 may include more, fewer, or different modules than those in the embodiment shown in FIG. 7, or a combination of some modules, or splits from some modules, or use a different module layout, or the like. This is not limited in this application.

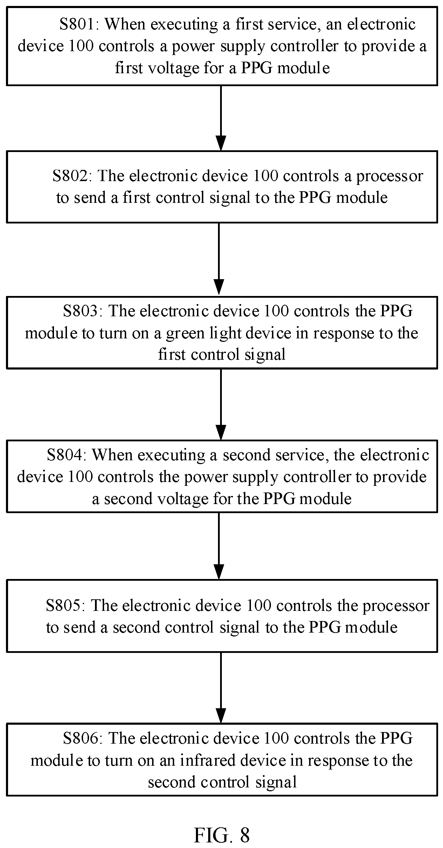

FIG. 8 is a schematic flowchart of a service execution method according to an embodiment of this application.

As shown in FIG. 8, a specific procedure of the service execution method may include the following steps.

S801: When executing a first service, an electronic device 100 controls a power supply controller to provide a first voltage for a PPG module.

The first service may be a service that needs to use a green light device in the PPG module in the embodiment shown in FIG. 3.

In some embodiments, the first service may be the service that needs to use the green light device in the PPG module and whose quantity of execution times is one in the embodiment shown in FIG. 3.

The first voltage may be the voltage of the power supply 1 in the foregoing embodiment.

The power supply controller may be the power supply switch in the foregoing embodiment.

S802: The electronic device 100 controls a processor to send a first control signal to the PPG module.

The first control signal may be used to control the PPG module to turn on the green light device.

S803: The electronic device 100 controls the PPG module to turn on the green light device in response to the first control signal.

S804: When executing a second service, the electronic device 100 controls the power supply controller to provide a second voltage for the PPG module.

The second service may be a service that does not need to use the green light device in the PPG module but needs to use the IR device in the embodiment shown in FIG. 3.

The second voltage may be the voltage of the power supply 2 in the foregoing embodiment.

S805: The electronic device 100 controls the processor to send a second control signal to the PPG module.

The first control signal may be used to control the PPG module to turn on the IR device.

S806: The electronic device 100 controls the PPG module to turn on the infrared device in response to the second control signal.

According to the service execution method provided in this application, when the green light device in the PPG module does not need to be used, a low voltage can be provided for the PPG module, which reduces power consumption of the PPG module and improves a battery life capability of the electronic device.

In a possible implementation, the electronic device further includes a first circuit and a second circuit. The first circuit is configured to convert a voltage of a battery into the first voltage, and the first circuit is further configured to provide the first voltage for the power supply controller. The second circuit is configured to convert the voltage of the battery into the second voltage, and the second circuit is further configured to provide the second voltage for the power supply controller. Controlling the power supply controller to provide the first voltage for the PPG module specifically includes: controlling the processor to send a first signal to the power supply controller; and controlling the power supply controller to provide the first voltage for the PPG module in response to the first signal. Controlling the power supply controller to provide the second voltage for the PPG module specifically includes: controlling the processor to send a second signal to the power supply controller; and controlling the power supply controller to provide the second voltage for the PPG module in response to the second signal.

In this way, two different voltages may be provided by using one battery.

After the voltage is converted by the circuit, a voltage that is the same as the voltage of the battery may be obtained, or a voltage that is different from the voltage of the battery may be obtained.

In this embodiment of this application, the first signal may be the signal 1 in the foregoing embodiment.

In a possible implementation, the first circuit includes a voltage boost device, and the second circuit includes a voltage stabilizing device.

In this way, the first voltage that is higher than the voltage of the battery may be obtained by using the voltage boost device, and the second voltage that is the same as or close to the voltage of the battery may be obtained by using the voltage stabilizing device.

In a possible implementation, the electronic device further includes a first battery and a second battery. The first battery is configured to provide the first voltage for the power supply controller, and the second battery is configured to provide the second voltage for the power supply controller. Controlling the power supply controller to provide the first voltage for the PPG module specifically includes: controlling the processor to send a first signal to the power supply controller; and controlling the power supply controller to provide the first voltage for the PPG module in response to the first signal. Controlling the power supply controller to provide the second voltage for the PPG module specifically includes: controlling the processor to send a second signal to the power supply controller; and controlling the power supply controller to provide the second voltage for the PPG module in response to the second signal.

In this way, two different voltages may be provided by using two batteries.

In this embodiment of this application, the second signal may be the signal 2 in the foregoing embodiment.

In a possible implementation, the method further includes: before controlling the power supply controller to provide the first voltage for the PPG module, determining that a quantity of execution times of the first service is one, where the quantity of execution times indicates whether to end the service after the service is executed once; and when a third service is executed, determining that a quantity of execution times of the third service is a plurality of times; controlling the power supply controller to provide the second voltage for the PPG module; controlling the processor to send a first control signal to the PPG module; and controlling the PPG module to turn on the green light device in response to the first control signal.

In this way, for a service that needs to use the green light device and whose quantity of execution times is one, a high voltage may be provided for the PPG module when the service is executed. For a service that needs to use the green light device and whose quantity of execution times is a plurality of times, a low voltage may be provided for the PPG module when the service is executed.

In a possible implementation, in a process of executing the second service, the method further includes: when the first service is executed, controlling the power supply controller to switch an input voltage of the PPG module from the second voltage to the first voltage; controlling the processor to send a first control signal to the PPG module; and controlling the PPG module to turn on the green light device in response to the first control signal.

In this way, when a low voltage is used to supply power to the PPG module, if there is a service that needs a high voltage, the input voltage of the PPG module may be switched to a high voltage.

In a possible implementation, after the second service is executed, the method further includes: when the first service is executed, if controlling the power supply controller to provide the first voltage for the PPG module fails, controlling the power supply controller to provide the second voltage for the PPG module.

In this way, when power cannot be supplied to the PPG module by using the first voltage, power may be supplied to the PPG module by using the second voltage.

In a possible implementation, after the first service is executed, the method further includes: when the second service is executed, if controlling the power supply controller to provide the second voltage for the PPG module fails, controlling the power supply controller to provide the first voltage for the PPG module.

In this way, when power cannot be supplied to the PPG module by using the second voltage, power may be supplied to the PPG module by using the first voltage.

The implementations of this application may be randomly combined to achieve different technical effect.

All or a part of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedure or functions according to this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (solid state disk, SSD)), or the like.

A person of ordinary skill in the art may understand that all or a part of the procedures of the methods in the foregoing embodiments may be implemented by a computer program instructing related hardware. The program may be stored in a computer-readable storage medium. When the program is executed, the procedures in the foregoing method embodiments may be performed. The foregoing storage medium includes any medium that can store program code, such as a ROM, a random access memory RAM, a magnetic disk, or an optical disc.

In conclusion, the foregoing descriptions are merely embodiments of the technical solutions of the present invention, but are not intended to limit the protection scope of the present invention. Any modification, equivalent replacement, improvement, or the like made in accordance with the disclosure of the present invention shall be included in the protection scope of the present invention.

## Claims

1. A service execution method, applied to an electronic device, wherein the electronic device comprises a processor, a power supply controller, and a photoplethysmography PPG module, the PPG module comprises an infrared device and a green light device, and the method comprises:
when a first service is executed, controlling the power supply controller to provide a first voltage for the PPG module;
controlling the processor to send a first control signal to the PPG module; and
controlling the PPG module to turn on the green light device in response to the first control signal; and
when a second service is executed, controlling the power supply controller to provide a second voltage for the PPG module;
controlling the processor to send a second control signal to the PPG module; and
controlling the PPG module to turn on the infrared device in response to the second control signal.

2. The method according to claim 1, wherein the electronic device further comprises a first circuit and a second circuit, the first circuit is configured to convert a voltage of a battery into the first voltage, the first circuit is further configured to provide the first voltage for the power supply controller, the second circuit is configured to convert the voltage of the battery into the second voltage, and the second circuit is further configured to provide the second voltage for the power supply controller;
controlling the power supply controller to provide the first voltage for the PPG module specifically comprises:
controlling the processor to send a first signal to the power supply controller; and
controlling the power supply controller to provide the first voltage for the PPG module in response to the first signal; and
controlling the power supply controller to provide the second voltage for the PPG module specifically comprises:
controlling the processor to send a second signal to the power supply controller; and
controlling the power supply controller to provide the second voltage for the PPG module in response to the second signal.

3. The method according to claim 2, wherein the first circuit comprises a voltage boost device, and the second circuit comprises a voltage stabilizing device.

4. The method according to claim 1, wherein the electronic device further comprises a first battery and a second battery, the first battery is configured to provide the first voltage for the power supply controller, and the second battery is configured to provide the second voltage for the power supply controller;
controlling the power supply controller to provide the first voltage for the PPG module specifically comprises:
controlling the processor to send a first signal to the power supply controller; and
controlling the power supply controller to provide the first voltage for the PPG module in response to the first signal; and
controlling the power supply controller to provide the second voltage for the PPG module specifically comprises:
controlling the processor to send a second signal to the power supply controller; and
controlling the power supply controller to provide the second voltage for the PPG module in response to the second signal.

5. The method according to any one of claims 1 to 4, wherein the method further comprises:
before controlling the power supply controller to provide the first voltage for the PPG module, determining that a quantity of execution times of the first service is one, wherein the quantity of execution times indicates whether to end the service after the service is executed once; and
when a third service is executed, determining that a quantity of execution times of the third service is a plurality of times;
controlling the power supply controller to provide the second voltage for the PPG module;
controlling the processor to send the first control signal to the PPG module; and
controlling the PPG module to turn on the green light device in response to the first control signal.

6. The method according to any one of claims 1 to 5, wherein in a process of executing the second service, the method further comprises:
when the first service is executed, controlling the power supply controller to switch an input voltage of the PPG module from the second voltage to the first voltage;
controlling the processor to send the first control signal to the PPG module; and
controlling the PPG module to turn on the green light device in response to the first control signal.

7. The method according to any one of claims 1 to 6, wherein after the second service is executed, the method further comprises:
when the first service is executed, if controlling the power supply controller to provide the first voltage for the PPG module fails, controlling the power supply controller to provide the second voltage for the PPG module.

8. The method according to claims 1 to 7, wherein after the first service is executed, the method further comprises:
when the second service is executed, if controlling the power supply controller to provide the second voltage for the PPG module fails, controlling the power supply controller to provide the first voltage for the PPG module.

9. An electronic device, comprising one or more processors, one or more memories, and a PPG module, wherein the one or more memories are coupled to the one or more processors, the one or more memories are configured to store computer program code, the computer program code comprises computer instructions, and when the one or more processors execute the computer instructions, the electronic device is enabled to perform the method according to any one of claims 1 to 8.

10. A computer-readable storage medium, comprising computer instructions, wherein when the computer instructions are run on an electronic device, the electronic device is enabled to perform the method according to any one of claims 1 to 8.
